# EUROPEAN PATENT APPLICATION

(11) **EP 4 711 998 A1**
(43) Date of publication of application: **18.03.2026**
(21) Application number: 24306499.5
(22) Date of filing: 12.09.2024
(51) Int. Cl.: G06Q 20/22, G06Q 20/34, G06Q 20/40

(54) **METHOD FOR MANAGING THE CONFIGURATION OF A SMART CARD**

(71) Applicant: THALES DIS FRANCE SAS, 92190 Meudon (FR)
(72) Inventor: PRASOJO, Luki Sugiarto, 427267 Singapore (SG)
(74) Representative: Grevin, Emmanuel

(57) **Abstract**

The invention is a method for controlling usage of a device (50) of a first user. The device hosts a first application (10) comprising a first API (13) designed to cooperate with an applicative terminal (70) for performing a transaction. The method comprises the following steps:
establishing a communication channel between a supervision application (40) hosted in an apparatus (60) of a second user and a control application (20) hosted in the device (50),
sending by the supervision application (40) to the control application (20) a configuration command (401) requesting activation of a usage setting (65),
then, exchanging data between the first application (10) and the control application (20) through a second API (12) of the first application (10) to contribute to a compliance check of the transaction with said usage setting, said first application being configured to refuse to continue said transaction if the compliance check failed.

## Description

### (Field of the invention)

The present invention relates to methods for controlling usage of a smart card. It relates particularly to methods for managing the configuration of the smart card to control usage of the smart card.

### (Background of the invention)

A payment card may participate to a financial transaction for providing a connected terminal with data required to conduct the transaction. For example, the financial transaction may be a payment carried out via a Point-Of-Sale (POS) terminal or a cash withdrawal made with an automated teller machine (ATM).

A bank issuer (i.e. bank which issued the payment cards) can deliver payment cards that are personalized with applicative settings which limit the total amount the card may spend for a fixed period such as a week or a month. This kind of applicative settings may also be updated when the payment card goes online during a financial transaction with a POS terminal or an ATM for instance.

### (Summary of the Invention)

However, there is no easy and convenient way to limit the total amount allowed in a credit card in an offline (i.e. without connection with a remote server) manner by the cardholder. Additionally, there is no offline way to keep track of expenses made with a credit card.

There is a need to enhance the way configuration settings of a smart card can be managed on the field without online connection to a distant server.

The invention aims at solving the above-mentioned technical problem.

An object of the present invention is a computer-implemented method for controlling usage of a device of a first user. The device hosts a first application comprising a first application programing Interface, API, designed to cooperate with an applicative terminal for performing an applicative transaction. The method comprises the steps of:
establishing a communication channel between a supervision application hosted in an apparatus of a second user and a control application hosted in the device,
sending by the supervision application to the control application a configuration command requesting activation of a usage setting,
then, exchanging data between the first application and the control application through a second API of the first application to contribute to a compliance check of the applicative transaction with said usage setting, said first application being configured to refuse to continue said applicative transaction if the compliance check failed.

Advantageously, the first application may query the control application to retrieve the usage setting during the applicative transaction.

Advantageously, the first application may generate usage data for said applicative transaction, said usage data reflecting one or more applicative parameters linked to said applicative transaction and the method may further comprise the steps of:
sending by the supervision application to the control application a tracking command requesting sending of said usage data,
upon receipt of the tracking command, obtaining said usage data by the control application, and
sending by the control application to the supervision application a tracking response, comprising the usage data.

Advantageously, the supervision application may use the usage data to generate a new usage setting and to send to the control application a second configuration command requesting activation of the new usage setting in the first application.

Advantageously, the device may be a payment instrument, the first application may be a payment application, and the applicative terminal may be either a Point-of-sale (POS) terminal or an Automated Teller Machine (ATM).

Advantageously, the first application may be a transport application, and the applicative terminal may be a terminal designed to validate or control access to transport vehicles.

Advantageously, the first application may be an access application, and the applicative terminal may be an access control terminal designed to authorize access to a physical or a digital area.

Another object of the present invention is a system for controlling usage of a device of a first user. The device hosts a first application comprising a first application programing interface (API) designed to cooperate with an applicative terminal for performing applicative transactions. The system comprises the device and an apparatus of a second user. Both a supervision application hosted in the apparatus and a control application hosted in the device are designed to establish a communication channel. The supervision application is configured to send to the control application a configuration command requesting activation of a usage setting. Both said first application and control application are configured to exchange data through a second API of the first application to contribute to a compliance check of the applicative transaction with said usage setting. Said first application is configured to refuse to continue the applicative transaction if the compliance check failed.

Advantageously, the first application may be configured to query the control application to retrieve the usage setting during the applicative transaction.

Advantageously, the first application may be configured to generate usage data for each of said applicative transactions, said usage data reflecting one or more applicative parameters linked to each of said applicative transactions. The supervision application may be configured to send to the control application a tracking command requesting sending of said usage data. Upon receipt of the tracking command, the control application may be configured to obtain said usage data. The control application may be configured to send to the supervision application a tracking response, comprising said usage data.

Advantageously, the supervision application may be configured to use the usage data to generate a new usage setting and to send to the control application a second configuration command requesting activation of the new usage setting in the first application.

Advantageously, the first application may be a transport application, and the applicative terminal may be a terminal designed to validate or control access to transport vehicles.

Advantageously, the first application may be an access application, and the applicative terminal may be an access control terminal designed to authorize access to a physical or a digital area.

Advantageously, the apparatus may be a phone, a tablet PC, a laptop, a personal digital assistant (PDA) or a smartwatch.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows a first exemplary flow diagram for updating configuration parameter(s) of a payment card according to an example of the invention;
- Figure 2 shows a second exemplary flow diagram for updating configuration parameter(s) of a payment card according to an example of the invention and
- Figure 3 shows an exemplary flow diagram for tracking usage of a payment card according to an example of the invention.

### (Detailed description of the preferred embodiments)

Smart cards are portable small devices comprising at least a memory, a microprocessor, and an operating system for computing treatments. They may comprise services applications like payment, access control, identity, or telecom applications. Smart cards may be considered as secure elements. They may comprise a plurality of memories of different types, like non-volatile memory and volatile memory. They are considered as tamper-resistant (or "secure") because they are able to control access to the data they contain and to authorize or not the use of their data by other machines. A smartcard may also provide computation services based on cryptographic engines. In general, smartcards have limited computing resources and limited memory resources and they are intended to connect a host machine which may provide them with electric power either in contact mode or contactless mode.

The invention may apply to any type of portable device intended to participate to an applicative transaction with a coupled terminal. For example, the portable device may be a payment card such as a credit card or a debit card, a device hosting a transport application or a device hosting an access control application. The portable device can be a smart card or a connected wearable device like a watch, a ring, or a bracelet.

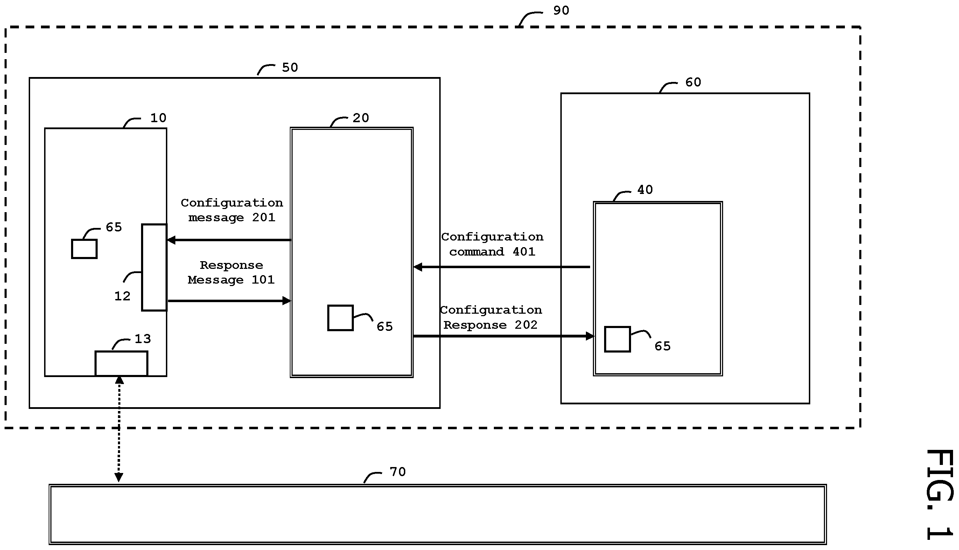

Figure 1 depicts a first exemplary flow diagram for updating configuration parameter(s) of a payment card according to an example of the invention.

In this example, the device 50 is a payment card which may be implemented as a physical smart card. The device 50 is assigned to a first user which may be a child for instance.

The first exemplary flow can be performed when no payment transaction takes place.

The device 50 hosts a first application 10 comprising a first application programing Interface (API) 13 designed to cooperate with an applicative terminal 70 for performing applicative transactions. For example, the first application 10 may be a payment application and the applicative terminal 70 may be a POS terminal.

In the present document, an applicative transaction is a transaction involving both the device 50 and the applicative terminal 70. Such applicative transaction may be a banking transaction, a building access control transaction or a public transport access transaction for instance.

The device 50 hosts a control application 20 separate from the first application 10.

A physical apparatus 60 assigned of a second user (like a parent of the child for instance) hosts a supervision application 40. Preferably, the physical apparatus 60 may be a smartphone.

In some embodiments, the physical apparatus 60 may be a tablet PC, a Personal Digital Assistant (PDA), or a or a smartwatch for instance.

In one step, a communication channel is established between the supervision application 40 and the control application 20. In preferred embodiments, both the device 50 and the physical apparatus 60 are NFC-capable and the communication channel is established as a contactless channel. Alternatively, the physical apparatus 60 may embeds a card reader and the communication channel may be established as a contact channel by inserting the card 50 in the card reader.

The second user may select usage setting 65 to be applied by the first application 10 of the portable device 50.

Then the supervision application 40 sends to the control application 20 (through the communication channel) a configuration command 401 requesting activation of a usage setting 65 into the device 50. The control application 20 may send to the supervision application 40 a configuration response 202 acknowledging good receipt of the usage setting 65.

The first application 10 comprises a second API 12 dedicated to exchange data with the control application 20. The control application 20 sends the usage setting 65 to the first application 10 through the second API. For instance, the control application 20 may send to the first application 10 a configuration message 201 containing the usage setting 65 and the first application 10 may send to the control application 20 a response message 101 acknowledging good receipt of the usage setting 65.

Then the first application 10 activates the usage setting 65. The first application is designed to participate to applicative transactions by applying the activated usage setting. In some embodiments, the fact to stores the received usage setting 65 in a memory area managed by the first application automatically and implicitly activates the usage setting 65. Alternatively, a specific field associated to the usage setting 65 can be handled by the first application 10 to reflect activation of the usage setting 65. For instance, the specific field may be initialized to a disabled state when the usage setting 65 is received from the control application 20 then set to an activated state at the next start of the first application 10.

In some embodiments, the control application 20 may send to the first application 10 the usage setting as soon as delivered by the supervision application 40.

In some embodiments the usage setting 65 may specify a maximum threshold of daily, weekly, or monthly expenses.

In some embodiments the usage setting 65 may specify the type(s) of transaction authorized. For instance, the usage setting 65 may authorize the first application to contribute to cash withdrawal only.

In some embodiments the usage setting 65 may specify one maximum spending threshold with the debit option and another maximum spending threshold with the credit option.

The usage setting may be a combination of the above-presented usage parameters or other parameters.

In some embodiments, the first application 10 may query the control application 20 to retrieve the usage setting independently of any applicative transaction, for example, when the first application 10 starts.

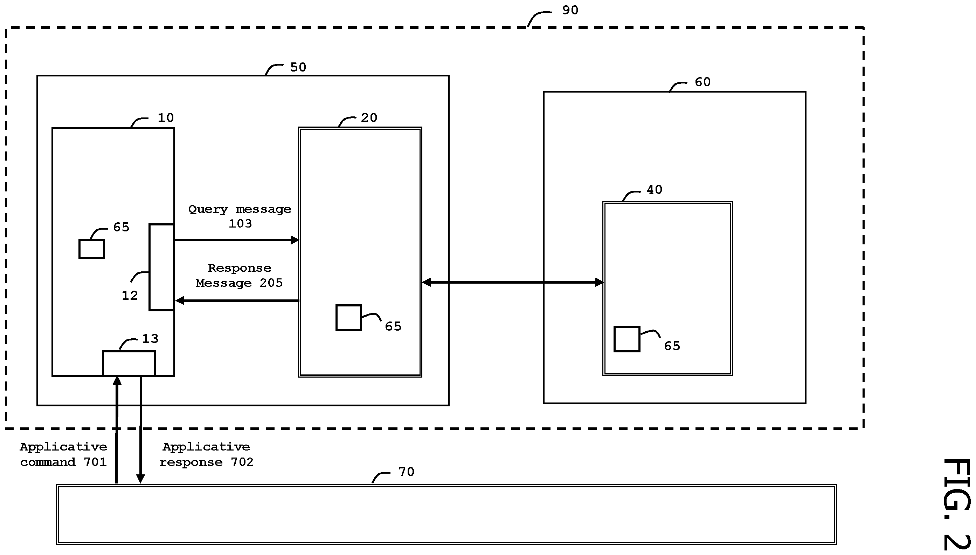

Figure 2 depicts a second exemplary flow diagram for updating configuration parameter(s) of a payment card according to an example of the invention.

In this example, the device 50 is a payment card like the one described in Figure 1.

In the second exemplary flow, the first application 10 can retrieve the usage setting 65 from the control application 20 on the fly during a payment transaction.

At a first stage, the supervision application 40 may provide usage setting 65 to the control application 20 as described for the flow of Figure 1. Thus, the control application 20 may stores the received usage setting 65 in a non-volatile memory area dedicated to the control application 20.

Then a payment transaction starts between the first application 10 and the applicative terminal 70. Upon receipt of an applicative command 701, the first application 10 may query the control application 20 to retrieve the usage setting. This ensures that the most up-to-date available usage settings can be applied by the first application. For instance, the first application 10 may send to the control application 20 a query message 103 requesting the usage settings. In turn, the control application 20 may send to the first application 10 a response message 205 containing the usage settings 65.

Preferably, the applicative command 701 may be the Generate Application Cryptogram (Generate AC) command as defined by EMV^{®} Integrated Circuit Card Specifications for Payment Systems, Version 4.3 for instance. In some embodiments, the applicative command 701 may be the Get Processing Options (GPO) command as defined by EMV^{®} Specifications.

Upon receipt of the response message 205, the first application 10 may automatically activate and store the received usage settings 65.

From this point on, the first application 10 may apply the usage settings 65 to allow or deny the current payment transaction to continue. For instance, if the usage settings 65 specify a maximum threshold of weekly expenses equal to 200 dollars and the current payment transaction would lead to exceed the $200 threshold, the first application 10 would refuse to continue the payment transaction. In such a case, the first application 10 may send an applicative response 702 (in response to the applicative command 701) reflecting the refusal to continue the current transaction.

In some embodiments, upon request from the first application 10, the control application 20 can check whether the current transaction is acceptable against the usage settings 65 and inform the first application 10 of the result of this check. In particular, the control application 20 can return a response containing one of the three possible choices: "usage settings not initialized" / "limit exceeded" / "successful check". Depending on the information received, the first application 10 accepts or refuses to continue the current transaction with the applicative terminal. In such embodiments, the usage setting may remain in the control application 20 and not sent to the first application 10.

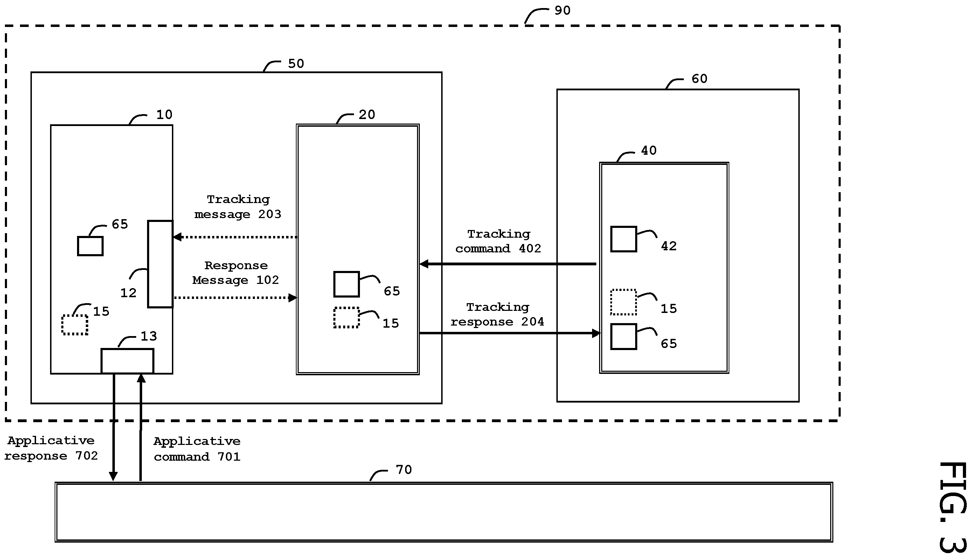

Figure 3 depicts an exemplary flow diagram for tracking usage of a payment card according to an example of the invention.

In this example, the device 50 is a payment card like the one described in Figures 1 and 2.

The first application 10 generates usage data 15 for each of applicative transactions in which it is involved. The usage data reflect one or more applicative parameters linked to performed financial transactions. Typically, the usage data may track the amount, currency, date, type of transaction or name of the merchant for instance.

In some embodiments, the first application 10 may automatically send (via the API 12) the usage data 15 to the control application 20 according to a preset event like the end of a transaction or the start of the first application 10.

In some embodiments, the control application 20 may fetch the usage data 15 from the first application 10. For instance, the control application 20 may send to the first application 10 a tracking message 203 requesting the usage data. In response, the first application 10 may send a response message 102 containing the collected usage data 15.

The supervision application 40 (installed in the apparatus 60 of the second user) may send to the control application 20 a tracking command 402 requesting sending of the usage data. Upon receipt of the tracking command 402, the control application 20 may obtain the usage data 15 (either by querying on the fly the first application 10 or by reading its own dedicated memory area). Then the control application 20 may prepare and send to the supervision application 40 a tracking response 204 which contains the usage data 15.

At this stage, the second user can consult the usage data 15 retrieved from the device 50. The usage data may encompass the amount, currency, date, type of transaction, name of the merchant, place, identifier of the applicative terminal, or type of purchased good/service for instance.

In some embodiments, the supervision application 40 can use the usage data 15 and a preset rule 42 to generate a new usage setting and send to the control application 20 a second configuration command requesting activation of the new usage setting in the first application 10. Thus, the supervision application 40 may automatically adjust the usage setting taking into account transaction history.

For instance, assuming that the usage setting initially activated in the first application 10 specify that the expenses are limited to 60 dollars per week and that the usage data shows that only 45 dollars was spent last week (I.e., 15 dollars left unspent), the supervision application 40 may generate a new usage setting which specifies that the expenses are limited to 75 dollars (= 60 + 15) dollars for the next week.

Although detailed for a banking transaction, the embodiments of the invention can apply to other transaction types.

In one example, the first application 10 may be a transport application and the applicative terminal 70 may be a terminal designed to validate or control access to transport vehicles. Thus, the first user can be a public transport user while the second user can be a representative of the transport network manager for instance.

In another example, the first application 10 may be an access control application and the applicative terminal 70 may be an access control terminal designed to authorize or refuse access to a physical area (like a building or a room) or a digital area (like a hard disk or a secured memory). Thus, the first user can be an employee while the second user can be a security officer for instance.

The system 90 shown in Figure 3 is an example of a system for controlling usage of a portable device 50 of a first user. The system 90 comprises the portable device which hosts a control application 20. The portable device hosts a first application 10 that comprises a first application programing Interface (API) 13 which is designed to cooperate with an applicative terminal 70 for performing applicative transactions. The first application 10 comprises a second API 12 which is designed to cooperate with the control application 20.

The portable device 50 comprises one or more memories, one or more hardware processors and program instructions designed to provide the functions of the device required by the different embodiments of the invention when executed by the hardware processor(s).

The system 90 comprises a physical apparatus 60 of a second user. Preferably, the second user is different form the first user. In some embodiments, the second user can be the first user.

The apparatus 60 comprises one or more hardware processors and program instructions designed to provide the functions of the apparatus required by the different embodiments of the invention when executed by the hardware processor(s).

The apparatus 60 hosts a supervision application 40. Both the control application 20 and the supervision application 40 are designed to establish a communication channel. Preferably, the communication channel may rely on a contactless technology like NFC or Bluetooth^{®} for instance.

The supervision application 40 is configured to send to the control application 20 a configuration command 401 requesting activation of a usage setting that should be applied to applicative transactions in which the first application 10 is involved.

Both the first application 10 and the control application 20 are configured to exchange data through a second API 12 of the first application to contribute to a compliance check of the applicative transaction with the usage setting.

The first application is configured to refuse to continue the applicative transaction if the compliance check failed.

The compliance check may use parameters intrinsic to the applicative transaction, like the amount, the currency, the type of transaction and the date for a payment transaction.

In some embodiments, the first application 10 may be configured to request the control application 20 to check whether the applicative transaction complies with the usage setting and the control application 20 may be configured to perform the compliance check before returning a response to the first application. In such embodiments, the first application 10 is configured to provide the relevant transaction parameters (ex: amount, currency, etc.) to the control application 20.

In some embodiments, the control application 20 is configured to send to the first application 10 (via the second API 12) a configuration message 201 requesting activation of the usage setting. Upon receipt of the configuration message 201, the first application 10 is configured to activate the usage setting, and to check whether the applicative transaction complies with the usage setting.

In some embodiments, the first application 10 may be configured to generate usage data 15 for the applicative transaction. The usage data reflect one or more applicative parameters linked to the applicative transaction. The supervision application 40 may be configured to send to the control application 20 a tracking command 402 requesting sending of said usage data. Upon receipt of the tracking command 402, the control application 20 may be designed to obtain the usage data 15 and to send to the supervision application a tracking response 204 which contains the usage data 15.

In some embodiments, the supervision application 40 may be configured to use the received usage data to generate a new usage setting and to send to the control application 20 a second configuration command requesting activation of the new usage setting for the first application 10.

In some embodiments, the device 50 may host two or more applications able to contribute to applicative transactions. For instance, the device 50 may host a payment application and a transport application. The control application 20 can be configured to handle a first set of usage settings assigned to the payment application and a second set of usage settings assigned to the transport application. The control application 20 can be configured to perform the compliance check for applicative transactions involving either the payment application or the transport application.

An advantage of some embodiments of the invention, is to allow parents to give their children their supplementary Credit card, while being in control of their spending daily limit. Parents may also easily control different limits to different supplementary cards as well.

Additionally, parents may keep track of their daily spending.

An advantage of some embodiments of the invention, is to remain compliant with the usual applicative flow of the messages exchanged between the first application and the applicative terminal. For example, the existing park of payment terminals and ATM can be kept unchanged in case some embodiments of the invention are deployed for payment transactions.

## Claims

1. A computer-implemented method for controlling usage of a device (50) of a first user, said device hosting a first application (10) comprising a first application programing Interface, API, (13) designed to cooperate with an applicative terminal (70) for performing an applicative transaction, wherein the method comprises:
establishing a communication channel between a supervision application (40) hosted in an apparatus (60) of a second user and a control application (20) hosted in the device (50),
sending by the supervision application (40) to the control application (20) a configuration command (401) requesting activation of a usage setting (65),
then, exchanging data between the first application (10) and the control application (20) through a second API (12) of the first application (10) to contribute to a compliance check of the applicative transaction with said usage setting, said first application being configured to refuse to continue said applicative transaction if the compliance check failed.

2. The method according to claim 1, wherein the first application (10) queries the control application (20) to retrieve the usage setting during the applicative transaction.

3. The method according to claim 1, wherein the first application (10) generates usage data (15) for said applicative transaction, said usage data reflecting one or more applicative parameters linked to said applicative transaction and wherein the method further comprises:
sending by the supervision application (40) to the control application (20) a tracking command (402) requesting sending of said usage data (15),
upon receipt of the tracking command (402), obtaining said usage data (15) by the control application (20), and
sending by the control application (20) to the supervision application (40) a tracking response (204), comprising said usage data (15).

4. The method according to claim 3, wherein the supervision application (40) uses the usage data to generate a new usage setting and sends to the control application (20) a second configuration command requesting activation of the new usage setting in the first application (10).

5. The method according to claim 1, wherein the device (50) is a payment instrument, the first application (10) is a payment application, and the applicative terminal (70) is either a Point-of-sale terminal or an Automated Teller Machine.

6. The method according to claim 1, wherein the first application (10) is a transport application, and the applicative terminal (70) is a terminal designed to validate or control access to transport vehicles.

7. The method according to claim 1, wherein the first application (10) is an access application, and the applicative terminal (70) is an access control terminal designed to authorize access to a physical or a digital area.

8. A system (90) for controlling usage of a device (50) of a first user, said device (50) hosting a first application (10) comprising a first application programing Interface, API, (13) designed to cooperate with an applicative terminal (70) for performing applicative transactions, wherein said system comprises the device (20) and an apparatus (60) of a second user,
wherein a supervision application (40) hosted in the apparatus (60) and a control application (20) hosted in the device (50) are designed to establish a communication channel,
wherein the supervision application (40) is configured to send to the control application a configuration command (401) requesting activation of a usage setting (65),
wherein, both said first application (10) and control application (20) are configured to exchange data through a second API (12) of the first application to contribute to a compliance check of the applicative transaction with said usage setting, and
wherein said first application is configured to refuse to continue the applicative transaction if the compliance check failed.

9. A system according to claim 8, wherein the first application (10) is configured to query the control application (20) to retrieve the usage setting during the applicative transaction.

10. The system according to claim 8, wherein the first application (10) is configured to generate usage data (15) for each of said applicative transactions, said usage data reflecting one or more applicative parameters linked to said applicative transaction,
wherein the supervision application (40) is configured to send to the control application (20) a tracking command (402) requesting sending of said usage data (15),
wherein, upon receipt of the tracking command (402), the control application (20) is configured to obtain said usage data (15), and
wherein the control application (20) is configured to send to the supervision application (40) a tracking response (204), comprising said usage data (15).

11. The system according to claim 10, wherein the supervision application (40) is configured to use the usage data to generate a new usage setting and to send to the control application (20) a second configuration command requesting activation of the new usage setting in the first application (10).

12. The system according to claim 8, wherein the device (50) is a payment instrument, the first application (10) is a payment application, and the applicative terminal (70) is either a Point-of-sale terminal or an Automated Teller Machine.

13. The system according to claim 8, wherein the first application (10) is a transport application, and the applicative terminal (70) is a terminal designed to validate or control access to transport vehicles.

14. The system according to claim 8, wherein the first application (10) is an access application, and the applicative terminal (70) is an access control terminal designed to authorize access to a physical or a digital area.

15. The system according to claim 8, wherein the apparatus (60) is a phone, a tablet PC, a laptop, a Personal digital assistant or a smartwatch.
